# DEMANDE DE BREVET EUROPEEN

(11) **EP 0 578 543 A1**
(43) Date de publication de la demande: **12.01.1994**
(21) Numéro de dépôt: 93401706.2
(22) Date de dépôt: 01.07.1993
(51) Int. Cl.: H04N 1/00, H04N 1/32

(54) **Télécopieur à alimentation isolée d'interface de ligne**

(30) Priorité: 06.07.1992 FR 9208308
(71) Demandeur: SOCIETE D'APPLICATIONS GENERALES D'ELECTRICITE ET DE MECANIQUE SAGEM, F-75783 Paris Cédex 16 (FR)
(72) Inventeur: Auffray, Jean-Paul, Vaureal, F-95000 Cergy (FR)
(74) Mandataire: Bloch, Gérard

(57) **Abrégé**

Télécopieur (1) comportant une interface (2) avec un réseau de transmission de données (20) et dont une alimentation (3), reliée à ladite interface (2), est isolée vis-à-vis des autres parties (5) du télécopieur (1).

Application aux télécopieurs.

## Description

Un télécopieur classique comporte, notamment, un modem agencé pour être relié à une ligne d'un réseau de transmission de données, comme par exemple le réseau téléphonique commuté RTC, un processeur central et une source d'alimentation pour alimenter le modem, le processeur et les autres composants du télécopieur.

Le modem fait partie d'une interface de ligne assurant une isolation du télécopieur vis-à-vis des surtensions éventuelles provenant de la ligne. Dans cette interface, en plus du modem, qui procure l'isolation voulue, d'autres composants sont prévus pour relier temporairement les fils de ligne au modem, par exemple pour effectuer une prise de la ligne en y raccordant le modem en début de communication et, en fin de communication, effectuer une commutation en sens inverse pour rompre cette liaison de la ligne au modem.

Cette commutation est réalisée au moyen de deux contacts d'un relais de cette interface, chacun en série sur un fil propre de la ligne et susceptibles d'interrompre la liaison de ces fils vers le modem. D'autres contacts peuvent être nécessaires pour commuter la ligne vers des composants autres que le modem, par exemple des composants de réception ou d'émission de signalisation téléphonique, ou vers un autre terminal, par exemple un poste téléphonique associé au télécopieur.

L'actionnement de ces contacts est effectué par la bobine du relais, qui est commandée par le processeur central. Cependant, ces contacts étant reliés à la ligne, ils en subissent les surtensions éventuelles, qui risquent d'être transmises à la bobine du relais commandant ces contacts et, par là, au processeur, qui peut être endommagé, ainsi qu'à l'ensemble des circuits associés et au boîtier du télécopieur. De même, il faut assurer la protection des utilisateurs vis-à-vis de ces surtensions, telles la foudre, susceptibles d'élever fortement le potentiel du boîtier du télécopieur par rapport à la terre.

Pour ce faire, la ligne est usuellement isolée du télécopieur par un relais d'un type à haut pouvoir isolant entre sa bobine, reliée au processeur, et ses contacts, reliés à la ligne. Ce haut pouvoir isolant est obtenu en utilisant un relais ayant un espace d'air élevé entre ses contacts, d'une part, et sa bobine, d'autre part, ce qui nécessite un relais de gros volume et de coût élevé. De tels relais doivent être implantés pour réaliser, par leurs contacts, chacune des commutations de ligne voulues, ainsi que pour établir, en sens inverse, des transmissions d'informations allant de la ligne vers le processeur, la bobine étant alors branchée sur la ligne et leurs contacts étant reliés au processeur. Il s'ensuit que le coût et le volume occupé croissent rapidement avec le nombre de ces relais.

La présente invention vise à résoudre ces problèmes.
A cet effet, la présente invention concerne un télécopieur comportant une interface de liaison à un réseau de transmission de données, caractérisé par le fait que l'interface est alimentée par une source isolée par rapport au reste du télécopieur.

On connaît aussi le principe consistant à utiliser une alimentation isolée par rapport à l'alimentation secteur, cette alimentation isolée fournissant les tensions nécessaires à tous les circuits du télécopieur.

Cependant, cela ne résoud le problème d'isolation que vis-à-vis du secteur et cela ne traite pas le problème des échanges d'informations avec le télécopieur, qui se pose pour les liaisons de celui-ci avec la ligne.

On peut ainsi, avec le télécopieur de l'invention, disposer d'une interface avec son alimentation propre, dont le potentiel peut suivre celui de la ligne à laquelle elle est raccordée par des relais à isolation limitée, donc de coût et volume limités, sans risque pour les autres parties du télécopieur puisque cette alimentation n'y est pas reliée. Il n'est donc plus nécessaire alors de disposer de relais à haut pouvoir isolant au niveau de la ligne. Pour ce qui est des liaisons logiques entre l'interface et l'unité centrale à processeur, nécessaires pour commander les relais ou en recevoir les signaux, elles sont effectuées par des composants d'isolation dont les signaux de commande sont d'amplitude limitée, si bien que leur entrée n'a pas à être robuste et les composants doivent simplement assurer l'isolation entre leur entrée et leur sortie, sans devoir commuter beaucoup d'énergie. De ce fait, les relais peuvent être de taille limitée et être constitués de composants électroniques.

De préférence, l'alimentation isolée de l'interface du télécopieur de l'invention est du type à découpage, ce qui lui assure un bon rendement et permet d'utiliser un montage à transformateur d'entrée réalisant l'isolation voulue vis-à-vis de la source primaire l'alimentant, source qui est susceptible de servir aussi pour d'autres alimentations, par exemple celle des autres parties du télécopieur.

L'interface comporte, de préférence, un relais dont la bobine est commandée par un photo-coupleur, ce dernier, commandé, par exemple, par l'unité centrale, assurant ainsi, sous forme intégrée, l'isolation voulue entre cette unité centrale et la ligne, à laquelle sont raccordés les contacts du relais. On peut ainsi utiliser un relais à relativement faible isolation, par exemple 500 volts entre sa bobine et ses contacts, donc de volume limité, tandis que le photo-coupleur assure une isolation de 5 000 volts, par exemple. De plus, un photo-coupleur est plus fiable qu'un relais au point de vue isolation puisqu'il ne comporte pas de volume d'air, comme un relais pouvant recevoir des impuretés conductrices.

Avantageusement, cette interface comporte un terminal téléphonique alimenté par ladite alimentation isolée, terminal servant alors d'organe d'entrée de commandes du télécopieur et pouvant disposer d'une logique intelligente offrant des fonctions évoluées, alimentée par cette alimentation isolée.

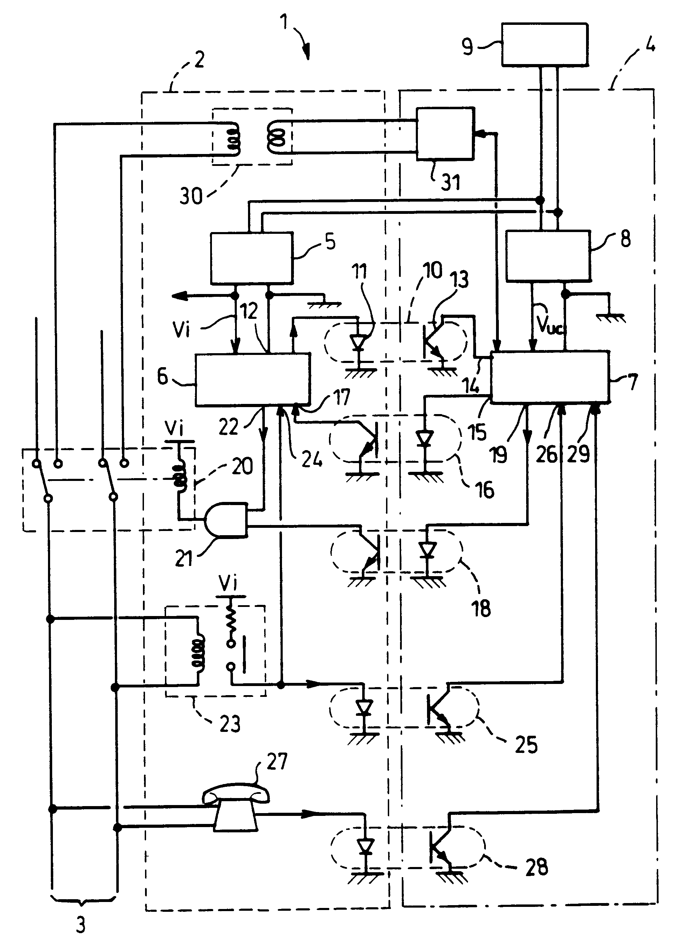

L'invention sera mieux comprise à l'aide de la description suivante de la forme de réalisation préférée du télécopieur selon l'invention, en référence à la figure unique en annexe qui la représente.

Le télécopieur 1, qui va maintenant être décrit, comporte une interface 2, de liaison avec une ligne 3 du réseau téléphonique commuté RTC, et d'autres circuits 4, isolés par rapport à l'interface 2 et à la ligne 3. L'interface 2 comprend essentiellement des éléments connus de l'homme du métier, comme un transformateur de ligne 30, et des relais. De même, les circuits 4 comprennent un modem 31, un processeur 7 de l'unité centrale du télécopieur auquel est relié le modem, et tous les périphériques classiques d'un télécopieur raccordés au processeur 7, comme un scanner et une imprimante.

L'interface 2 est alimentée, sous une tension Vi, par une source d'alimentation isolée 5 de type alimentation à découpage, qui fournit les tensions nécessaires à une unité 6 de commande et de contrôle de cette interface 2 ainsi qu'à des relais, décrits plus loin, de cette interface 2. Les circuits 4 comportent une unité centrale 7 gérant le télécopieur 1 et qui est alimentée par une source d'alimentation principale 8, de tension Vuc, elle-même recevant son énergie d'une source primaire 9 alimentant aussi la source d'alimentation isolée 5.

Trois entités sont donc à considérer, à savoir l'interface 2, comprenant l'unité de commande 6, les circuits 4, comprenant l'unité centrale 7, et la ligne 3, entités entre lesquelles sont établies trois liaisons bidirectionnelles, au moyen de photo-coupleurs assurant l'isolation voulue.

Des liaisons logiques entre l'unité de commande 6 et l'unité centrale 7 sont réalisées au moyen d'un photo-coupleur 10 dont la diode d'entrée 11 est commandée par une sortie 12 de cette unité de commande 6, tandis que le transistor de sortie 13 de ce photo-coupleur 10 est relié à une entrée 14 de l'unité centrale 7.

Une sortie 15 de l'unité centrale 7 commande la diode d'un photo-coupleur 16, dont le transistor de sortie est relié à une entrée 17 de l'unité de commande 6.

Pour les liaisons entre l'unité centrale 7 et la ligne 3, la diode d'entrée d'un photo-coupleur 18 est commandée par une sortie 19 de l'unité centrale 7, le transistor de sortie commande la bobine, d'un relais de sortie 20 à deux contacts, alimentée par la source 5. Les contacts du relais 20 sont reliés à la ligne téléphonique 3. Une porte logique 21 est interposée entre le transistor du photo-coupleur 18 et la bobine du relais de sortie 20 pour permettre la commande de cette bobine à partir d'une sortie 22 de l'unité de commande 6. La bobine d'un relais d'entrée 23 est branchée en parallèle sur la ligne 3, un contact de ce relais 23 étant, d'un côté, soumis à la tension Vi par l'intermédiaire d'une résistance. Par son autre côté, il fournit une information correspondant à l'état des signaux sur la ligne 3. Cette information est transmise à une entrée 24 de l'unité de commande 6 et commande aussi la diode d'entrée d'un photo-coupleur 25 dont le transistor de sortie est relié à une entrée 26 de l'unité centrale 7.

Pour ce qui est des liaisons entre l'unité de commande 6 et la ligne 3, elles sont réalisées au moyen du relais de sortie 20 et du relais d'entrée 23. On comprendra que si l'unité de commande 6 devait disposer en propre de tels relais, sans en partager l'utilisation avec l'unité centrale 7, il suffirait de dupliquer les relais décrits en supprimant leur liaison à l'unité centrale 7.

D'autre part, un poste téléphonique 27, branché en parallèle sur la ligne 3, commande la diode d'entrée d'un photo-coupleur 28 dont le transistor de sortie est relié à une entrée 29 de l'unité centrale 7.

Le fonctionnement du télécopieur 1 est le suivant.

Les photo-coupleurs 10 et 16 permettent des liaisons logiques bidirectionnelles directes entre l'unité de commande 6 et l'unité centrale 7.

Côté ligne 3, le décrocher d'un appareil distant provoque un courant dans le relais d'entrée 23, dont le contact transmet cette information à l'unité de commande 6, ainsi qu'à l'unité centrale 7 par le photo-coupleur 25.

L'unité centrale 7 peut actionner le relais de sortie 20 pour, par exemple, simuler des coupures de numérotation.

L'unité de commande 6 peut avoir des fonctions semblables à celles de l'unité centrale 7 vis-à-vis du relais d'entrée 23 ou de sortie 20, comme cela est schématisé par la liaison entre la sortie 22 de l'unité de commande 6 et la porte logique 21 commandant le relais de sortie 20, ainsi que par la liaison entre le contact du relais d'entrée 23 et l'entrée 24 de l'unité de commande 6.

Les photo-coupleurs 18 et 25 permettent ainsi des échanges bidirectionnels d'informations entre l'unité centrale 7 et la ligne 3, ainsi qu'entre la ligne 3 et l'unité de commande 6.

Le poste téléphonique 27 peut, pour sa part, communiquer avec l'unité centrale 7 au moyen du photo-coupleur 28. Il peut évidemment être prévu qu'il ait, tout comme l'unité de commande 6, d'autres liaisons. Le poste téléphonique 27 permet, notamment, à un utilisateur d'entrer des données dans le télécopieur 1, par exemple des données de numérotation d'appel, sans qu'il y ait de problème d'isolation entre la ligne 3, reliée au poste téléphonique 27 par un relais à faible pouvoir isolant, et l'unité centrale 7.

D'une façon générale, le fait de disposer de la source d'alimentation isolée 5 dans l'interface 2 permet d'y implanter des circuits électroniques complexes offrant des fonctions évoluées, par exemple un annuaire pour les numéros à appeler, un rappel automatique cyclique d'un télécopieur occupé, ou même un rappel entièrement automatique si la ligne 3 fournit l'indication du raccrochage d'un télécopieur appelé occupé, comme cela est le cas dans un Réseau Numérique à Intégration de Services (RNIS), ce qui optimise le rendement du télécopieur 1 tout en déchargeant l'utilisateur de tâches fastidieuses.

Le poste téléphonique 27 peut aussi être remplacé par un autre télécopieur en isolant, par commutation, la ligne 3 vis-à-vis des deux télécopieurs et en commutant leurs sorties sur une ligne locale, au moyen du relais de sortie 20, réalisant ainsi un réseau local.

## Revendications

1. Télécopieur (1) comportant une interface (2) de liaison à un réseau de transmission de données (3), caractérisé par le fait que l'interface (2) est alimentée par une source (5) isolée par rapport au reste (4) du télécopieur (1).

2. Télécopieur selon la revendication 1, dans lequel ladite source (5) est du type alimentation à découpage.

3. Télécopieur selon l'une des revendications 1 et 2, dans lequel ladite interface (2) comporte un relais (20) dont la bobine est commandée par un photo-coupleur (18).

4. Télécopieur selon l'une des revendications 1 à 3, dans lequel ladite interface (2) comporte un terminal téléphonique (27) alimenté par ladite source (5).
